# FASCICULE DE BREVET EUROPEEN

(11) **EP 1 233 218 B1**
(45) Date de publication et mention de la délivrance du brevet: **22.02.2006**
(21) Numéro de dépôt: 01403169.4
(22) Date de dépôt: 07.12.2001
(51) Int. Cl.: F16K 17/06, G05D 16/10

(54) **Soupape à amplification d'ouverture et régulateur de pression équipé d'une telle soupape**
Ventil mit Öffnungverstärkung und Druckregler versehen mit einem solchen Ventil
Opening amplification valve and pressure regulator equipped with such a valve

(30) Priorité: 21.12.2000 FR 0016760
(43) Date de publication de la demande: 21.08.2002
(73) Titulaire: TAEMA, F-92182 Antony Cédex (FR)
(72) Inventeur: Bleys, Christian, 77000 Livry sur Seine (FR); Collado, Pedro, 77330 Ozoir la Ferrière (FR)
(74) Mandataire: Pittis, Olivier

(56) Documents cités:
- WO-A-98/08012
- WO-A-98/30859
- DE-B- 1 220 688
- US-A- 2 655 936

## Description

L'invention porte sur une soupape à amplification d'ouverture pour régulateur de pression. Les soupapes incorporées dans les régulateurs de pression permettent d'évacuer les remontées en pression lentes dans le circuit basse pression et protègent assez bien les installations situées en aval.

Les remontées de pression sont généralement causées par des impuretés venant se loger entre le siège et le clapet.

En général, les soupapes actuelles sont suffisantes pour pallier ce type de défaut.

Toutefois, dans les détendeurs pour bouteilles de gaz comprimés haute pression, en général pour des pressions allant de 150 bar à 300 bar, voire au delà de 300 bar, des problèmes de sécurité peuvent se poser.

En effet, pour ces pressions élevées, les risqués majeurs, outre les remontées lentes décrites ci-avant, sont des brusques surpressions éventuelles pouvant être exceptionnellement provoquées par le blocage du clapet de détente en position ouverte, suite à un défaut de fonctionnement, tel un blocage, un grippage.

Dans ce cas, le gaz à haute pression arrive brusquement dans la chambre basse pression. Si la soupape n'a pas une réaction d'ouverture rapide et suffisante pour évacuer ce gaz à haute pression, les zones habituellement soumises à la basse pression risquent de ne pas résister et un éclatement peut survenir.

Les normes concernant les détendeurs industriels ou pour les gaz médicaux intègrent les règles de fonctionnement de ces soupapes et rappelées par notamment le document FR-A-9606925.

Cependant dans le cas spécifique de détendeurs à fort débits, les soupapes existantes n'atteignent pas une ouverture suffisante pour absorber les débits importants.

Par ailleurs, on peut citer le document WO-A-98/30859 qui décrit un régulateur de pression de gaz pour pistolet à balle de peinture permettant de réduire la pression d'un gaz sous pression élevée. Ce dispositif comprend un piston mobile dans une chambre comprenant trois compartiments successifs, lequel piston étant normalement repoussé par un ressort contre un siège de piston formé par la paroi du compartiment intermédiaire. De par la configuration de ce dispositif, la face avant du piston ne vient jamais au contact du fond du compartiment amont dans lequel entre le gaz à détendre, ce qui ne permet pas d'obtenir une amplification d'ouverture en cas d'augmentation soudaine de la quantité de gaz devant être fournie.

Par ailleurs, on peut également citer les documents DE-A-1220688, WO-A-98108012 et US-A-2,655,936 qui décrivent des dispositifs de régulation de la pression de fluide de conceptions rudimentaires. En particulier, WO-A-98/08012 et US-A-2,655,936 décrivent des soupapes selon le préambule de la revendication 1 ne permettant pas d'assurer une amplification d'ouverture lors d'une surpression gazeuse.

Le but de l'invention est alors de réaliser une soupape de décharge intégrant les contraintes fixées par les normes internationales, de limiter les risques décrits ci-dessus, tout en restant de conception simple.

Dit autrement la présente invention vise à proposer une soupape de décharge à réaction rapide, à amplification d'ouverture, ayant, une précision d'ouverture indéréglable et d'une très bonne répétitivité, plus particulièrement destinée aux régulateurs pour bouteilles de gaz comprimés ou aux centrales de détentes industrielles ou médicales en haute pression dont la demande de débit est importante.

La solution apportée par la présente invention est alors une soupape comprenant :
- un corps de soupape comportant :
   - une chambre interne d'axe (AA) comprenant un compartiment amont et un compartiment aval, ledit compartiment amont étant de section cylindrique et de diamètre (Dam) et ledit compartiment aval étant de section cylindrique et de diamètre (Dav), avec Dam < Dav,
   - au moins un orifice d'entrée de fluide aménagé dans la paroi dudit corps de soupape et débouchant dans le compartiment amont de la chambre interne, et
   - au moins un orifice de sortie de fluide, et
- un corps de piston mobile en translation selon l'axe (AA) à l'intérieur d'au moins une partie de ladite chambre interne et étant situé entre lesdits orifice d'entrée de fluide et orifice de sortie de fluide, ledit corps de piston ayant une face avant située du côté de l'orifice d'entrée de fluide, une face arrière située du côté de l'orifice de sortie de fluide, et une paroi latérale située entre lesdites face avant et face arrière, ladite paroi latérale du corps de piston présentant au moins une première portion (P1) de section cylindrique et de premier diamètre (D1) et au moins une deuxième portion (P2) de section cylindrique et de deuxième diamètre (D2), avec D1 < D2, D2 < Dav, et Dam > D2,

et dans laquelle la paroi dudit corps de soupape comporte une face interne formant le fond du compartiment amont, sur laquelle vient normalement prendre appui la face avant du corps de piston, se caractérisant en ce que:
- la première portion (P1) de diamètre (D1) du corps de piston est située dans la chambre interne de diamètre (Dam) du compartiment amont lorsque la face avant du corps de piston vient prendre appui sur la face interne du corps de soupape.

Selon le cas, la soupape de l'invention peut comprendre les caractéristiques suivantes :
- le deuxième diamètre (D2) de la deuxième portion (P2) est approximativement égal au diamètre (Dam) du corps de soupape.
- lorsque le corps de piston se déplace en translation selon l'axe (AA) et dans le sens tendant à l'éloigner de l'orifice d'entrée de fluide, la deuxième portion (P2) de paroi latérale du corps de piston passe successivement du compartiment amont au compartiment aval de la chambre interne de manière à libérer un espace permettant au fluide de circuler entre la paroi latérale de ladite deuxième portion (P2) du corps de piston et la paroi interne au compartiment aval de la chambre interne.
- la face avant du corps de piston comporte des moyens d'étanchéité,
- une partie du compartiment aval de la chambre interne comporte un moyen élastique venant normalement exercer une force de poussée sur la face arrière du corps de piston, selon l'axe (AA) et dans le sens tendant à rapprocher la face avant du corps de piston de la face interne dudit corps de soupape, de préférence le moyen élastique est un ressort,
- un orifice d'entrée de fluide débouche sur, la face interne du compartiment amont, de préférence orifice d'entrée de fluide débouche vers le centre de la face interne
- la première portion (P1) de premier diamètre (D1) est située en amont de la deuxième portion (P2) de deuxième diamètre (D2), lorsque l'on considère le sens de circulation d'un fluide passant, successivement du compartiment amont au compartiment aval,
- un moyen d'étanchéité est aménagé dans la paroi périphérique interne du compartiment amont de manière à assurer une étanchéité fluidique entre lesdits compartiment amont et compartiment aval, lorsque la deuxième portion (P2) de paroi latérale du corps de piston est positionnée en regard dudit moyen d'étanchéité, de préférence ledit moyen d'étanchéité est un joint annulaire,
- un orifice de fuite est aménagé au travers de la deuxième portion (P2) de paroi latérale du corps de piston de manière à mettre en communication fluidique le compartiment aval avec la partie du compartiment amont située entre ladite deuxième portion (P2) de paroi latérale du corps de piston et la face avant du corps de piston,
- des moyens de réglage coopèrent avec le moyen élastique de manière à pouvoir régler ou ajuster la force de poussée s'exerçant sur la face arrière du corps de piston,
- elle est formée d'au moins une première sous-unité et d'une deuxième sous-unité venant se fixer l'une à l'autre, la première sous-unité incluant au moins le compartiment amont et au moins un orifice d'entrée de fluide et la deuxième sous-unité comportant au moins un orifice de sortie de fluide, de préférence les deux sous-unités peuvent s'emboîter l'une dans l'autre.

Selon un autre aspect, l'invention porte aussi sur un dispositif de régulation de pression permettant de réguler ou ajuster la pression d'un fluide, notamment d'un gaz, comportant une telle soupape.

Selon encore un autre aspect, l'invention a trait à un dispositif de régulation de pression permettant de réguler ou ajuster la pression, d'un fluide, notamment d'un gaz, comportant un corps principal comprenant un passage interne de fluide comportant une entrée de fluide à haute pression et une sortie de fluide à basse pression et des moyens de détente de fluide étant agencés, dans une chambre de détente de fluide, entre lesdites entrée de fluide à haute pression et sortie de fluide à basse pression, caractérisé en ce que ladite chambre de détente de fluide est en communication fluidique avec au moins un orifice d'entrée de fluide aménagé dans la paroi d'un corps de soupape et débouchant dans le compartiment amont de la chambre interne d'une soupape selon l'invention.

Par ailleurs, l'invention concerne aussi un récipient de fluide sous pression équipé d'un tel dispositif de régulation de pression, en particulier une bouteille de gaz, ou une canalisation de fluide sous pression équipée d'un tel dispositif de régulation de pression ou d'une soupape selon l'invention.

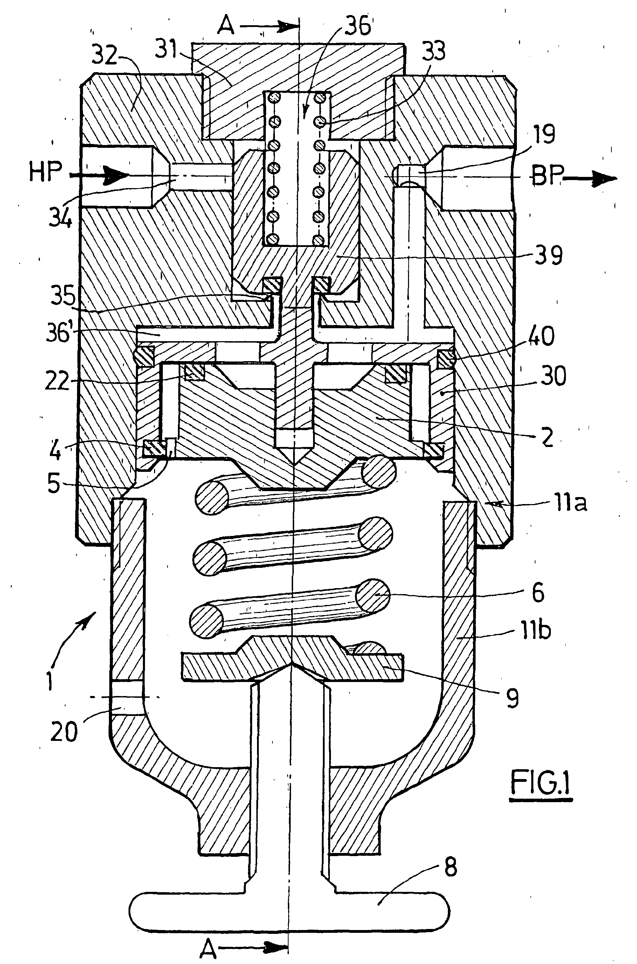

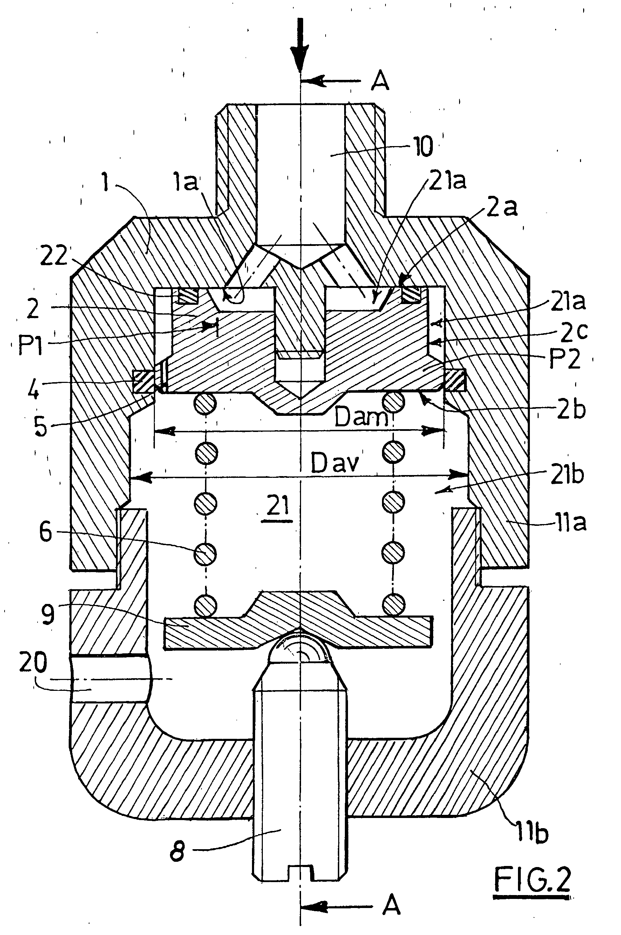

La présente invention est illustrée sur les figures 1 et 2 montrant des modes de réalisation possibles d'une soupape selon l'invention intégrée à un détendeur de gaz (figure 1) ou, à l'inverse, autonome (figure 2) c'est-à-dire non intégrée à un détendeur.

On voit sur la figure 1, le schéma d'un détendeur pour bouteille de gaz comprimé en haute pression composé d'un corps 32 dans lequel est ménagé un siège 35, d'un clapet 39 prenant appui sur le siège 35 grâce à la force exercée par un ressort de pression 33, l'ensemble étant contenu dans une chambre 36 haute pression fermée par un bouchon vissé 31. L'alimentation en gaz à haute pression (HP) se fait par l'orifice 34 d'entrée de gaz.

Dans la partie inférieure du corps 32, la chambre basse pression 36' est ménagée entre le corps 32 et le piston 30, un joint torique 40 effectue l'étanchéité du piston 30 avec l'extérieur.

La pression détendue et régulée est conduite en sortie vers un orifice 19 de sortie.

Le réglage de la pression détendue dans la chambre 36' est déterminé par l'équilibre entre la force axiale de compression du ressort de détente 6 et la force axiale résultant de la pression exercée sur le diamètre extérieur du piston 30. Le réglage de la pression s'effectue grâce à la vis de détente 8 qui appuie sur le centre de ressort 9 elle-même en appui sur le ressort 6.

Dans le piston 30 sont ménagés des passages pour alimenter le corps de soupape 2 de la soupape 1 dans le cas d'une montée en pression. La soupape est formée d'un corps métallique 2 plein, dont la face avant 2a est munie d'un joint d'étanchéité 22 venant appuyer sur le fond 1a plat du piston 30 servant ainsi, de siège.

Le diamètre du joint 22 est choisi de telle sorte que l'ouverture de la soupape s'effectue à une valeur bien précise par rapport au réglage initial de la pression qui règne dans la chambre 36'.

La surface d'étanchéité importante formée par le joint 22 permet d'obtenir une grande sensibilité sur le seuil d'ouverture ainsi qu'une réaction instantanée lors d'une montée brusque et élevée de la surpression et ce, grâce à une amplification instantanée d'ouverture de la soupape.

Pour satisfaire des critères de sécurité, le débit de la soupape doit être pris en compte pour permettre l'évacuation complète de la surpression brusque. Cette valeur de débit est généralement définie pour un niveau de pression égal à 2 fois la pression détendue. On considère qu'à cette valeur, le débit ne doit pas être inférieur au débit du détendeur annoncé par le fabricant. Dans ce cas, il se peut que le débit délivré par la soupape soit insuffisant.

Selon l'invention, on amplifie l'ouverture de la soupape pour qu'elle donne une section de passage supérieure et satisfasse les critères de débit énoncés ci-dessus.

Pour ce faire, le piston 2 possède deux diamètres internes successifs D1 et D2, l'un est ajusté au diamètre (D1 ≈ Dam) du joint torique 4 servant d'amplificateur, l'autre étant suffisamment réduit pour ménager une grande section de passage avec le joint (repère 8), lorsque la soupape est entièrement sortie de ce joint.

L'amplification d'ouverture est également rendue possible grâce à une coopération du fond du compartiment amont 21a avec la face avant 2a du corps de piston 2. En effet, selon l'invention, la paroi du corps de soupape 1 comporte une face interne 1a formant le fond du compartiment amont 21a, sur laquelle vient normalement prendre appui la face avant 2a du corps de piston 2.

Ceci permet de créer une ouverture instantanée dès que la soupape 2 se sépare de la face 2a sous l'effet d'une surpression celle-ci allant s'appliquer sur une surface plus importante correspondant au diamètre Dam, créant ainsi l'amplification d'ouverture souhaitée.

Le débit de gaz qui s'échappe de la soupape est ensuite évacué par un orifice de passage 20.

Par ailleurs, un orifice de fuite 5 est ménagé entre les deux diamètres du piston 2 de la soupape et l'extérieur au-delà du joint 4 afin de permettre la fermeture normale de la soupape lorsque la surpression a disparu.

Une autre particularité de l'invention réside dans le fait que, lorsque la soupape selon l'invention est intégrée à un détendeur de gaz comme montré sur la figure 1, alors ladite soupape reste séparée du piston de détente, c'est-à-dire que le piston de détente 30 reste opérationnel alors que la soupape peut jouer son rôle de sécurité. Ceci présente l'avantage d'avoir toujours un détendeur prêt à réguler dès que la soupape a fini de remplir son rôle, quand le problème de surpression a disparu.

La figure 2 schématise une soupape autonome destinée à être connectée sur un circuit dont on devra maîtriser la pression maximum.

Cette soupape est composée d'un corps 1 munie d'une entrée filetée 10 recevant le piston de la soupape et reposant sur le fond plat 1a du corps 1 ainsi que les deux diamètres successifs D1 et D2.

Une gorge a été ménagée dans le corps recevant un joint torique.

Le ressort 6 permet d'ajuster le niveau du seuil de pression grâce au préréglage de la vis 8 en appui sur le centre de ressort 9.

L'orifice 20 ménagé dans la coiffe 11b de soupape permet d'évacuer l'excès de pression et débit s'échappant de la soupape et collecté au point d'entrée.

## Revendications

1. Soupape comprenant :
- un corps de soupape (1) comportant :
. une chambre interne (21) d'axe (AA) comprenant un compartiment amont (21a) et un compartiment aval (21b), ledit compartiment amont (21a) étant de section cylindrique et de diamètre (Dam) et ledit compartiment aval (21b) étant de section cylindrique et de diamètre (Dav), avec Dam < Dav,
. au moins un orifice d'entrée (10) de fluide aménagé dans la paroi dudit corps de soupape (1) et débouchant dans le compartiment amont (21a) de la chambre interne (21), et
. au moins un orifice (20) de sortie de fluide, et
- un corps de piston (2) mobile en translation selon l'axe (AA) à l'intérieur d'au moins une partie de ladite chambre interne (21) et étant situé entre lesdits orifice d'entrée (10) de fluide et orifice de sortie de fluide, ledit corps de piston (2) ayant une face avant (2a) située du côté de l'orifice d'entrée (10) de fluide, une face arrière (2b) située du côté de l'orifice de sortie de fluide, et une paroi latérale (2c) située entre lesdites face avant (2a) et face arrière (2b), ladite paroi latérale (2c) du corps de piston (2) présentant au moins une première portion (P1) de section cylindrique et de premier diamètre (D1) et au moins une deuxième portion (P2) de section cylindrique et de deuxième diamètre (D2), avec D1 < D2, D2 < Dav, et Dam > D2,
et dans laquelle la paroi dudit corps de soupape (1) comporte une face interne (1a) formant le fond du compartiment amont (21a), sur laquelle vient normalement prendre appui la face avant (2a) du corps de piston (2),
**caractérisée en ce que** :
- la première portion (P1) de diamètre (D1) du corps de piston (2) est située dans la chambre interne (21) de diamètre (Dam) du compartiment amont (21a) lorsque la face avant (2a) du corps de piston (2) vient prendre appui sur la face interne (1a) du corps de soupape (1).

2. Soupape selon la revendication 1, **caractérisée en ce que** le deuxième diamètre (D2) de la deuxième portion (P2) est approximativement égal au diamètre (Dam) du corps de soupape.

3. Soupape selon l'une des revendications 1 ou 2, **caractérisée en ce que**, lorsque le corps de piston (2) se déplace en translation selon l'axe (AA) et dans le sens tendant à l'éloigner de l'orifice d'entrée de fluide, la deuxième portion (P2) de paroi latérale du corps de piston (2) passe successivement du compartiment amont (21a) au compartiment aval (21b) de la chambre interne (21) de manière à libérer un espace permettant au fluide de circuler entre la paroi latérale de ladite deuxième portion (P2) du corps de piston (2) et la paroi interne au compartiment aval (21b) de la chambre interne (21).

4. Soupape selon l'une des revendications 1 à 3, **caractérisée en ce que** la face avant (2a) du corps de piston comporte des moyens d'étanchéité (22), de préférence un joint torique.

5. Soupape selon la revendication 4, **caractérisée en ce qu'**au moins une partie du compartiment aval (21b) de la chambre interne (21) comporte un moyen élastique (6) venant normalement exercer une force de poussée sur la face arrière (2b) du corps de piston (2), selon l'axe (AA) et dans le sens tendant à rapprocher la face avant (2a) du corps de piston (2) de la face interne (1a) dudit corps de soupape (1), de préférence le moyen élastique (6) est un ressort.

6. Soupape selon la revendication 4, **caractérisée en ce qu'**au moins un orifice d'entrée (10) de fluide débouche sur la face interne (1a) du compartiment amont (21a), de préférence orifice d'entrée (10) de fluide débouche vers le centre de la face interne (1a).

7. Soupape selon l'une des revendications 1 à 6, **caractérisée en ce que** la première portion (P1) de premier diamètre (D1) est située en amont de la deuxième portion (P2) de deuxième diamètre (D2), lorsque l'on considère le sens de circulation d'un fluide passant successivement du compartiment amont (21a) au compartiment aval (21b).

8. Soupape selon l'une des revendications 1 à 7, **caractérisée en ce qu'**un moyen d'étanchéité (4) est aménagé dans la paroi périphérique interne du compartiment amont (21a) de manière à assurer une étanchéité fluidique entre lesdits compartiment amont (21a) et compartiment aval (21b), lorsque la deuxième portion (P2) de paroi latérale du corps de piston (2) est positionnée en regard dudit moyen d'étanchéité (4), de préférence ledit moyen d'étanchéité (4) est un joint annulaire.

9. Soupape selon l'une des revendications 1 à 8, **caractérisée en ce qu'**un orifice de fuite (5) est aménagé au travers de la deuxième portion (P2) de paroi latérale du corps de piston (2) de manière à mettre en communication fluidique le compartiment aval (21b) avec la partie du compartiment amont (21a) située entre ladite deuxième portion (P2) de paroi latérale du corps de piston (2) et la face avant (2a) du corps de piston (2).

10. Soupape selon l'une des revendications 1 à 9, **caractérisée en ce que** des moyens de réglage (9, 8) coopèrent avec le moyen élastique (6) de manière à pouvoir régler ou ajuster la force de poussée s'exerçant sur la face arrière (2b) du corps de piston (2).

11. Soupape selon l'une des revendications 1 à 10, **caractérisée en ce qu'**elle est formée d'au moins une première sous-unité (11a) et d'une deuxième sous-unité (11b) venant se fixer l'une à l'autre, la première sous-unité (11a) incluant au moins le compartiment amont (21a) et au moins un orifice d'entrée (10) de fluide et la deuxième sous-unité (1b) comportant au moins un orifice de sortie (20) de fluide, de préférence les deux sous-unités (1a, 1b) peuvent s'emboîter l'une dans l'autre.

12. Dispositif de régulation de pression permettant de réguler ou ajuster la pression d'un fluide, notamment d'un gaz, comportant une soupape selon l'une des revendications 1 à 11.

13. Dispositif de régulation de pression permettant de réguler ou ajuster la pression d'un fluide, notamment d'un gaz, comportant une soupape selon l'une des revendications 1 à 11, comportant un corps principal comprenant un passage interne de fluide comportant une entrée de fluide à haute pression et une sortie de fluide à basse pression et des moyens de détente de fluide étant agencés, dans une chambre de détente de fluide, entre lesdites entrée de fluide à haute pression et sortie de fluide à basse pression, **caractérisé en ce que** ladite chambre de détente de fluide est en communication fluidique avec au moins un orifice d'entrée (10) de fluide aménagé dans la paroi d'un corps de soupape (1) et débouchant dans le compartiment amont de la chambre interne (21) de la soupape selon l'une des revendications 1 à 11.

14. Récipient de fluide sous pression équipé d'un dispositif de régulation de pression selon l'une des revendications 12 ou 13, en particulier une bouteille de gaz.

15. Canalisation de fluide sous pression équipée d'un dispositif de régulation de pression selon l'une des revendications 12 ou 13 ou d'une soupape selon l'une des revendications 1 à 11.

## Patentansprüche

1. Ventil, umfassend:
- einen Ventilkörper (1), umfassend:
• eine Innenkammer (21) mit einer Achse (AA), umfassend ein stromaufwärtiges Abteil (21a) und ein stromabwärtiges Abteil (21b), wobei das stromaufwärtige Abteil (21a) einen zylindrischen Querschnitt und einen Durchmesser (Dam) aufweist und das stromabwärtige Abteil (21b) einen zylindrischen Querschnitt und einen Durchmesser (Dav) aufweist, wobei Dam < Dav,
• mindestens eine Fluideintrittsöffnung (10), die in der Wand des Ventilkörpers (1) vorgesehen ist und in das stromaufwärtige Abteil (21a) der Innenkammer (21) mündet, und
• mindestens eine Fluidaustrittsöffnung (20), und
- einen Kolbenkörper (2), der in Translation entlang der Achse (AA) im Inneren von mindestens einem Teil der Innenkammer (21) beweglich und zwischen der Fluideintrittsöffnung (10) und der Fluidaustrittsöffnung angeordnet ist, wobei der Kolbenkörper (2) eine Vorderseite (2a), die sich auf der Seite der Fluideintrittsöffnung (10) befindet, eine Rückseite (2b), die sich auf der Seite der Fluidaustrittsöffnung befindet, und eine Seitenwand (2c) aufweist, die sich zwischen der Vorderseite (2a) und der Rückseite (2b) befindet, wobei die Seitenwand (2c) des Kolbenkörpers (2) mindestens einen ersten Abschnitt (P1) mit zylindrischem Querschnitt und einem ersten Durchmesser (D1) und mindestens einen zweiten Abschnitt (P2) mit zylindrischem Querschnitt und einem zweiten Durchmesser (D2) aufweist, wobei D1 < D2, D2 < Dav und Dam > D2 ist, und wobei die Wand des Ventilkörpers (1) eine Innenseite (1a) aufweist, die den Boden des stromaufwärtigen Abteils (21a) bildet, auf dem normalerweise die Vorderseite (2a) des Kolbenkörpers (2) zur Auflage gelangt,
**dadurch gekennzeichnet, dass**:
sich der erste Abschnitt (P1) mit dem Durchmesser (D1) des Kolbenkörpers (2) in der Innenkammer (21) mit dem Durchmesser (Dam) des stromaufwärtigen Abteils (21a) befindet, wenn die Vorderseite (2a) des Kolbenkörpers (2) auf der Innenseite (1a) des Ventilkörpers (1) zur Auflage gelängt.

2. Ventil nach Anspruch 1, **dadurch gekennzeichnet, dass** der zweite Durchmesser (D2) des zweiten Abschnitts (P2) annähernd gleich dem Durchmesser (Dam) des Ventilkörpers ist.

3. Ventilkörper nach einem der Ansprüche 1 oder 2, **dadurch gekennzeichnet, dass**, wenn sich der Kolbenkörper (2) in Translation entlang der Achse (AA) und in die Richtung verschiebt, die dazu neigt, ihn von der Fluideintrittsöffnung zu entfernen, der zweite Abschnitt (P2) der Seitenwand des Kolbenkörpers (2) nach und nach vom stromaufwärtigen Abteil (21a) zum stromabwärtigen Abteil (21b) der Innenkammer (21) übergeht, um einen Raum freizugeben, der es dem Fluid ermöglicht, zwischen der Seitenwand des zweiten Abschnitts (P2) des Kolbenkörpers (2) und der Innenwand des stromabwärtigen Abteils (21b) der Innenkammer (21) zu zirkulieren.

4. Ventil nach einem der Ansprüche 1 bis 3, **dadurch gekennzeichnet, dass** die Vorderseite (2a) des Kolbenkörpers Dichtungsmittel (22), vorzugsweise eine Ringdichtung, umfasst.

5. Ventil nach Anspruch 4, **dadurch gekennzeichnet, dass** mindestens ein Teil des stromabwärtigen Abteils (21b) der Innenkammer (21) ein elastisches Mittel (6) umfasst, das normalerweise eine Schubkraft auf die Rückseite (2b) des Kolbenkörpers (2) entlang der Achse (AA) und in die Richtung ausübt, die dazu neigt, die Vorderseite (2a) des Kolbenkörpers (2) der Innenseite (1a) des Ventilkörpers (1) anzunähern, wobei das elastische Mittel (6) vorzugsweise eine Feder ist.

6. Ventil nach Anspruch 4, **dadurch gekennzeichnet, dass** mindestens eine Fluideintrittsöffnung (10) auf der Innenseite (1a) des stromaufwärtigen Abteils (21a) mündet, wobei die Fluideintrittsöffnung (10) vorzugsweise zur Mitte der Innenseite (1a) hin mündet.

7. Ventil nach einem der Ansprüche 1 bis 6, **dadurch gekennzeichnet, dass** sich der erste Abschnitt (P1) mit dem ersten Durchmesser (D1) stromaufwärts zum zweiten Abschnitt (P2) mit dem zweiten Durchmesser (D2) befindet, wenn die Zirkulationsrichtung eines Fluids betrachtet wird, das nach und nach vom stromaufwärtigen Abteil (21a) zum stromabwärtigen Abteil (21b) übergeht.

8. Ventil nach einem der Ansprüche 1 bis 7, **dadurch gekennzeichnet, dass** ein Dichtungsmittel (4) in der inneren Umfangswand des stromaufwärtigen Abteils (21a) angeordnet ist, um eine Fluiddichtigkeit zwischen dem stromaufwärtigen Abteil (21a) und dem stromabwärtigen Abteil (21b) sicher zu stellen, wenn der zweite Abschnitt (P2) der Seitenwand des Kolbenkörpers (2) gegenüber dem Dichtungsmittel (4) positioniert ist, wobei das Dichtungsmittel (4) vorzugsweise eine Ringdichtung ist.

9. Ventil nach einem der Ansprüche 1 bis 8, **dadurch gekennzeichnet, dass** eine Leckageöffnung (5) durch den zweiten Abschnitt (P2) der Seitenwand des Kolbenkörpers (2) vorgesehen ist, um das stromabwärtige Abteil (21b) mit dem Teil des stromaufwärtigen Abteils (21a) in Fluidverbindung zu bringen, der sich zwischen dem zweiten Seitenwandabschnitt (P2) des Kolbenkörpers (2) und der Vorderseite (2a) des Kolbenkörpers (2) befindet.

10. Ventil nach einem der Ansprüche 1 bis 9, **dadurch gekennzeichnet, dass** Regulierungsmittel (9, 8) mit dem elastischen Mittel (6) zusammenwirken, um die Schubkraft, die auf die Rückseite (2b) des Kolbenkörpers (2) ausgeübt wird, zu regulieren oder einzustellen.

11. Ventil nach einem der Ansprüche 1 bis 10, **dadurch gekennzeichnet, dass** es von mindestens einer ersten Untereinheit (11a) und einer zweiten Untereinheit (11b), die aufeinander befestigt werden, gebildet ist, wobei die erste Untereinheit (11a) mindestens das stromaufwärtige Abteil (21a) und mindestens eine Fluideintrittsöffnung (10) und die zweite Untereinheit (1b) mindestens eine Fluidaustrittsöffnung (20) umfasst, wobei die beiden Untereinheiten (1a, 1b) ineinander gesteckt werden können.

12. Druckregelvorrichtung, die es ermöglicht, den Druck eines Fluids, insbesondere eines Gases, zu regulieren oder einzustellen, umfassend ein Ventil nach einem der Ansprüche 1 bis 11.

13. Druckregelvorrichtung, die es ermöglicht, den Druck eines Fluids, insbesondere eines Gases, zu regulieren oder einzustellen, umfassend ein Ventil nach meinem der Ansprüche 1 bis 11 und einen Hauptkörper, umfassend einen inneren Fluiddurchgang, umfassend einen Hochdruckfluideintritt und einen Niederdruckfluidaustritt und Druckmindermittel für das Fluid, die in einer Druckminderkammer für das Fluid zwischen dem Hochdruckfluideintritt und dem Niederdruckfluidaustritt angeordnet sind, **dadurch gekennzeichnet, dass** die Druckminderkammer für das Fluid mit mindestens einer Fluideintrittsöffnung (10), die in der Wand eines Ventilkörpers (1) vorgesehen ist und in das stromaufwärtige Abteil der Innenkammer (21) des Ventils nach einem der Ansprüche 1 bis 11 mündet, in Fluidverbindung steht.

14. Druckfluidbehälter, der mit einer Druckregelvorrichtung nach einem der Ansprüche 12 oder 13 versehen ist, insbesondere eine Gasflasche.

15. Druckfluidkanal, der mit einer Druckregelvorrichtung nach einem der Ansprüche 12 oder 13 oder einem Ventil nach einem der Ansprüche 1 bis 11 versehen ist.

## Claims

1. Valve comprising:
- a valve body (1) comprising:
. an internal chamber (21) of axis (AA) comprising an upstream compartment (21a) and a downstream compartment (21b), the said upstream compartment (21) being of cylindrical cross section and of diameter (Dam) and the said downstream compartment (21b) being of cylindrical cross section and of diameter (Dav), with Dam < Dav,
. at least one fluid inlet orifice (10) formed in the wall of the said valve body (1) and opening into the upstream compartment (21a) of the internal chamber (21), and
. at least one fluid outlet orifice (20), and
- a piston body (2) that can move in translation along the axis (AA) inside at least one part of the said internal chamber (21) and is located between the said fluid inlet orifice (10) and the said fluid outlet orifice, the said piston body (2) having a front face (2a) located on the same side as the fluid inlet orifice (10), a rear face (2b) located on the same side as the fluid outlet orifice, and a lateral wall (2c) located between the said front face (2a) and the said rear face (2b), the said lateral wall (2c) of the piston body (2) having at least a first portion (P1) of cylindrical cross section and of first diameter (D1) and at least a second portion (P2) of cylindrical cross section and of second diameter (D2), with D1 < D2, D2 < Dav, and Dam < D2,
and in which the wall of the said valve body (1) has an internal face (a1) forming the end wall of the upstream compartment (21a), against which face the front face (2a) of the piston body (2) normally bears,
**characterized in that**:
- the first portion (P1), of diameter (D1), of the piston body (2) is located in the internal chamber (21), of diameter (Dam), of the upstream compartment (21a) when the front face (2a) of the piston body (2) bears against the internal face (1a) of the valve body (1).

2. Valve according to Claim 1, **characterized in that** the second diameter (D2) of the second portion (P2) is approximately equal to the diameter (Dam) of the valve body.

3. Valve according to either of Claims 1 and 2, **characterized in that**, when the piston body (2) moves in translation along the axis (AA) and in the direction that tends to move it away from the fluid inlet orifice, the second portion (P2) of the lateral wall of the piston body (2) passes in succession from the upstream compartment (21a) to the downstream compartment (21b) of the internal chamber (21) so as to open a space allowing fluid to flow between the lateral wall of the said second portion (P2) of the piston body (2) and the wall internal to the downstream compartment (21b) of the internal chamber (21).

4. Valve according to one of Claims 1 to 3, **characterized in that** the front face (2a) of the piston body comprises sealing means (22), preferably an O-ring.

5. Valve according to Claim 4, **characterized in that** at least part of the downstream compartment (21b) of the internal chamber (21) comprises an elastic means (6) which normally exerts a thrusting force on the rear face (2b) of the piston body (2), along the axis (AA) and in the direction that tends to bring the front face (2a) of the piston body (2) closer to the internal face (1a) of the said valve body (1), the elastic means (6) preferably being a spring.

6. Valve according to Claim 4, **characterized in that** at least one fluid inlet orifice (10) opens onto the internal face (1a) of the upstream compartment (21a), the fluid inlet orifice (10) preferably opening towards the centre of the internal face (1a).

7. Valve according to one of Claims 1 to 6, **characterized in that** the first portion (P1) of first diameter (D1) is located upstream of the second portion (P2) of second diameter (D2) when considering the direction in which a fluid flows as it passes in turn from the upstream compartment (21a) to the downstream compartment (21b).

8. Valve according to one of Claims 1 to 7, **characterized in that** a sealing means (4) is formed in the internal peripheral wall of the upstream compartment (21a) so as to provide a fluidic seal between the said upstream compartment (21a) and the said downstream compartment (21b), when the second portion (P2) of the lateral wall of the piston body (2) is positioned facing the said sealing means (4), the said sealing means (4) preferably being an annular seal.

9. Valve according to one of Claims 1 to 8, **characterized in that** a leakage orifice (5) is formed through the second portion (P2) of the lateral wall of the piston body (2) so as to place the downstream compartment (21b) in fluidic communication with that part of the upstream compartment (21a) that is located between the said second portion (P2) of the lateral wall of the piston body (2) and the front face (2a) of the piston body (2).

10. Valve according to one of Claims 1 to 9, **characterized in that** regulating means (9, 8) collaborate with the elastic means (6) so that the thrusting force exerted on the rear face (2b) of the piston body (2) can be regulated or adjusted.

11. Valve according to one of Claims 1 to 10, **characterized in that** it is formed of at least a first subunit (11a) and of a second subunit (11b) which are fixed together, the first subunit (11a) including at least the upstream compartment (21a) and at least one fluid inlet orifice (10), and the second subunit (1b) comprising at least one fluid outlet orifice (20), it preferably being possible for the two subunits (1a, 1b) to be fitted one inside the other.

12. Pressure regulating device making it possible to regulate or adjust the pressure of a fluid, particularly a gas, comprising a valve according to one of Claims 1 to 11.

13. Pressure regulating device making it possible to regulate or adjust the pressure of a fluid, particularly a gas, comprising a valve according to one of Claims 1 to 11, comprising a main body comprising an internal fluid passage comprising a high-pressure fluid inlet and a low-pressure fluid outlet and means for reducing the pressure of the fluid being arranged, in a fluid pressure reducing chamber, between the said high-pressure fluid inlet and the said low-pressure fluid outlet, **characterized in that** the said fluid pressure reducing chamber is in fluidic communication with at least one fluid inlet orifice (10) formed in the wall of a valve body (1) and opening into the upstream compartment of the internal chamber (21) of the valve according to one of Claims 1 to 11.

14. Container for pressurized fluid, equipped with a pressure regulating device according to either of Claims 12 and 13, particularly a gas cylinder.

15. Pipe for pressurized fluid, equipped with a pressure regulating device according to either of Claims 12 and 13 or with a valve according to one of Claims 1 to 11.
